# EUROPEAN PATENT APPLICATION

(11) **EP 3 998 367 A1**
(43) Date of publication of application: **18.05.2022**
(21) Application number: 20836631.0
(22) Date of filing: 29.06.2020
(51) Int. Cl.: C22C 38/00, C22C 38/40, C22C 38/60, H01M 4/66

(54) **FERRITIC STAINLESS STEEL SHEET FOR COLLECTORS OF SULFIDE-BASED SOLID-STATE BATTERIES**

(30) Priority: 09.07.2019 JP 2019127359
(71) Applicant: JFE Steel Corporation, Tokyo 100-0011 (JP)
(72) Inventor: YANO, Takayoshi, Tokyo 100-0011 (JP); ISHIKAWA, Shin, Tokyo 100-0011 (JP); MITSUI, Akio, Toyota-shi, Aichi 471-8571 (JP)
(74) Representative: Hoffmann Eitle
(86) International application number: PCT/JP2020/025485
(87) International publication number: WO 2021/006089

(57) **Abstract**

The present invention provides a ferritic stainless steel sheet for collectors of sulfide-based solid-state batteries, said ferritic stainless steel sheet having excellent sulfurization resistance. This ferritic stainless steel sheet has a component composition which contains, in mass%, from 0.001% to 0.050% of C, from 0.01% to 2.00% of Si, from 0.01% to 1.00% of Mn, 0.050% or less of P, 0.010% or less of S, from 18.00% to 32.00% of Cr, from 0.01% to 4.00% of Ni, from 0.001% to 0.150% of Al and 0.050% or less of N, with the balance being made up of Fe and unavoidable impurities.

## Description

### TECHNICAL FIELD

The present invention relates to a ferritic stainless steel sheet for a current collector in a sulfide-based solid-state battery.

### BACKGROUND ART

From the viewpoint of global environmental protection, production of electric vehicles (EVs) equipped with a lithium ion secondary battery (LIB) has been recently increasing. For further spread of such electric vehicles, improvements on an LIB are required such as further increase in the energy density, reduction in the charging time, and extension of the battery life. For this reason, sulfide-based solid electrolytes have been researched and developed.

For example, sulfide-based solid electrolytes such as Li₂S-P₂S₅-based solid electrolytes and LGPS (Li, Ge, P, S) - based solid electrolytes are expected as an electrolyte for an all-solid-state battery because such sulfide-based solid electrolytes have Li ion conductivity as high as that of an electrolytic solution. An all-solid-state battery in which a sulfide-based solid electrolyte is used is also referred to as a sulfide-based solid-state battery.

However, in the case of using a sulfide-based solid electrolyte as described above, corrosion of the current collector due to the sulfide is concerned. In the case of using a material having low sulfidation resistance in a current collector, deterioration of the performance and the safety in the battery is concerned.

For example, Patent Literature 1 discloses stainless steel as a material of a positive electrode current collector in a sulfide-based solid-state battery, and particularly discloses SUS304, SUS304L, SUS316, and SUS316L.

Patent Literature 2 discloses SUS316L as a material of a negative electrode current collector in a sulfide-based solid-state battery.

### CITATION LIST

### PATENT LITERATURES

Patent Literature 1: JP 2011-142037 A
Patent Literature 2: JP 2016-35913 A

### SUMMARY OF INVENTION

### TECHNICAL PROBLEMS

SUS304, SUS304L, SUS316, and SUS316L that are disclosed in Patent Literatures 1 and 2 are austenitic stainless steel.

In the case of using stainless steel as a current collector, the stainless steel sheet is to have a thickness of 5 to 30 µm. However, austenitic stainless steel is significantly work-hardened during rolling. Therefore, the number of rolling passes is to be increased, intermediate annealing is to be added, and the austenitic stainless steel is to be once softened and then rolled again. This causes deterioration of the productivity, increase in the manufacturing cost, and the like.

Therefore, the present inventors have studied application of ferritic stainless steel that is less likely to be work-hardened.

The present inventors first studied SUS430 (Cr: 16 mass%), which is typical ferritic stainless steel, but the sulfidation resistance was not sufficient in some cases in an environment in which use of a current collector in a sulfide-based solid-state battery was simulated. That is, there is a concern that the reaction between the steel and the sulfide leads to deterioration of the battery characteristic of the sulfide-based solid-state battery.

The cause of the deterioration of the battery characteristic is not clear, but the present inventors consider as follows. It is considered that as a result of the reaction between the steel and the sulfide, a thick reaction layer of the steel and the sulfide is formed at the interface between the steel surface and the sulfide-based solid electrolyte, or the sulfide-based solid electrolyte itself deteriorates, leading to deterioration of the battery characteristic.

The present invention has been made in view of the above, and an object of the present invention is to provide a ferritic stainless steel sheet having excellent sulfidation resistance for a current collector in a sulfide-based solid-state battery.

### SOLUTION TO PROBLEMS

The present inventors have made an intensive study in order to achieve the above-described object.

First, the present inventors studied the reason why the expected sulfidation resistance was not obtained in the case of using a ferritic stainless steel sheet having a Cr content of about 16 mass% as a current collector in a sulfide-based solid-state battery.

The environment to which a current collector in a sulfide-based solid-state battery is exposed is not clarified in many respects, and is a special environment in which moisture and oxygen are not present or are present in an extremely small amount, and a potential can be applied in the range of 0.0 to 5.0 V (vs. Li/Li⁺) (hereinafter, also referred to as "battery environment").

The present inventors have conceived that, in the battery environment, a ferritic stainless steel sheet having a Cr content of about 16 mass% has an unstable oxide film formed on the surface of the steel sheet, and therefore sulfidation resistance in the battery environment deteriorates in some cases.

Therefore, the present inventors have considered that if the ferritic stainless steel sheet can have a component composition at which a stable oxide film is formed on the surface of the steel sheet in the battery environment, the sulfidation resistance in the battery environment can be ensured.

The present inventors have specifically considered that a Cr oxide film that is thermodynamically stabler than a sulfide of Fe or Cr as a constituent element of the ferritic stainless steel sheet is to be formed on the surface of the ferritic stainless steel sheet stably and densely in order to suppress sulfurization of the ferritic stainless steel sheet. Thus, the present inventors have concluded that the Cr content in the ferritic stainless steel sheet is to be first improved, and other elements are to be controlled within a suitable range.

The present inventors have further studied and completed the present invention based on the above-described findings. That is, the configuration of the present invention is as follows.

[1] A ferritic stainless steel sheet for a current collector in a sulfide-based solid-state battery, the ferritic stainless steel sheet comprising, as a component composition: by mass,
   C in an amount of 0.001 to 0.050%;
   Si in an amount of 0.01 to 2.00%;
   Mn in an amount of 0.01 to 1.00%;
   P in an amount of 0.050% or less;
   S in an amount of 0.010% or less;
   Cr in an amount of 18.00 to 32.00%;
   Ni in an amount of 0.01 to 4.00%;
   Al in an amount of 0.001 to 0.150%;
   N in an amount of 0.050% or less; and
   a remaining part consisting of Fe and inevitable impurities.
[2] The ferritic stainless steel sheet for a current collector in a sulfide-based solid-state battery according to [1], the ferritic stainless steel sheet further comprising, as the component composition, at least one selected from the group consisting of, by mass,
   Mo in an amount of 0.01 to 2.50%,
   Cu in an amount of 0.01 to 0.80%,
   Co in an amount of 0.01 to 0.50%, and
   W in an amount of 0.01 to 3.00%.
[3] The ferritic stainless steel sheet for a current collector in a sulfide-based solid-state battery according to [1] or [2], the ferritic stainless steel sheet further comprising, as the component composition, at least one selected from the group consisting of, by mass,
   Ti in an amount of 0.01 to 0.45%,
   Nb in an amount of 0.01 to 0.60%,
   Zr in an amount of 0.01 to 0.40%,
   V in an amount of 0.01 to 0.30%,
   Ca in an amount of 0.0003 to 0.0030%,
   Mg in an amount of 0.0005 to 0.0050%,
   B in an amount of 0.0003 to 0.0050%,
   a rare earth metal (REM) in an amount of 0.001 to 0.100%,
   Sn in an amount of 0.001 to 0.500%, and
   Sb in an amount of 0.001 to 0.500%.

### ADVANTAGEOUS EFFECTS OF INVENTION

According to the present invention, it is possible to obtain a ferritic stainless steel sheet having excellent sulfidation resistance for a current collector in a sulfide-based solid-state battery.

### DESCRIPTION OF EMBODIMENTS

In the present description, a numerical range represented using "to" means a range including numerical values described before and after "to" as a lower limit value and an upper limit value.

In the present description, a "ferritic stainless steel sheet for a current collector in a sulfide-based solid-state battery" is also simply referred to as a "ferritic stainless steel sheet."

### (1) Ferritic Stainless Steel Sheet for Current Collector in Sulfide-Based Solid-State Battery

In the ferritic stainless steel sheet according to an embodiment of the present invention (hereinafter, also simply referred to as "the present invention" for convenience), the Cr content is increased, and other elements are controlled within an appropriate range.

### [Component Composition of Ferritic Stainless Steel Sheet]

The reason of limitation of the component composition in the ferritic stainless steel sheet of the present invention (hereinafter, also referred to as "component composition of the present invention" for convenience) will be described. The unit of the content of each element in the component composition is "mass%", and hereinafter, the unit "mass%" is simply referred to as "%" unless otherwise specified.

<Basic Component>

The component composition of the present invention includes, by mass, C in an amount of 0.001 to 0.050%, Si in an amount of 0.01 to 2.00%, Mn in an amount of 0.01 to 1.00%, P in an amount of 0.050% or less, S in an amount of 0.010% or less, Cr in an amount of 18.00 to 32.00%, Ni in an amount of 0.01 to 4.00%, Al in an amount of 0.001 to 0.150%, and N in an amount of 0.050% or less.

### C: 0.001 to 0.050%

C combines with Cr in the stainless steel and precipitates as a Cr carbide at the grain boundary to form a Cr-depleted layer, thus leading to deterioration of the corrosion resistance. Therefore, from the viewpoint of corrosion resistance, a smaller C content is more preferable, and the C content is 0.050% or less. The C content is preferably 0.030% or less, and more preferably 0.020% or less.

Meanwhile, if the C content is excessively reduced, the manufacturing cost is increased, and therefore the lower limit of the C content is 0.001%.

### Si: 0.01 to 2.00%

Si has an effect for deoxidation and is added in the melting and refining stage of stainless steel. This effect is obtained at a content of 0.01% or more.

However, if Si is excessively included, the stainless steel is hardened, and the ductility deteriorates. Therefore, the Si content is 2.00% or less. The Si content is preferably 1.00% or less, and more preferably 0.60% or less.

### Mn: 0.01 to 1.00%

Mn has an effect for deoxidation and is added in the melting and refining stage of stainless steel. This effect is obtained at a content of 0.01% or more.

However, if the Mn content is more than 1.00%, the corrosion resistance tends to deteriorate. Therefore, the Mn content is 1.00% or less. The Mn content is preferably 0.60% or less.

### P: 0.050% or less

P causes deterioration of the ductility, and therefore, a smaller P content is more preferable. However, if the P content is 0.050% or less, significant deterioration of the ductility is not caused. Therefore, the P content is 0.050% or less. The P content is preferably 0.040% or less.

The lower limit of the P content is not particularly limited. However, excessive removal of P leads to an increase in the manufacturing cost, and therefore the lower limit of the P content is preferably about 0.010%.

### S: 0.010% or less

S combines with Mn to form MnS. The MnS serves as a starting point for corrosion to cause deterioration of the corrosion resistance. However, if the S content is 0.010% or less, significant deterioration of the corrosion resistance is not caused. Therefore, the S content is 0.010% or less.

The lower limit of the S content is not particularly limited. However, excessive removal of S leads to an increase in the manufacturing cost, and therefore the lower limit of the S content is preferably about 0.001%.

### Cr: 18.00 to 32.00%

If the ferritic stainless steel sheet contains 18.00% or more of Cr, a Cr oxide film having sulfidation resistance is formed on the surface of the ferritic stainless steel sheet, and thus deterioration of the sulfidation resistance in the ferritic stainless steel sheet can be suppressed even in the case of using the ferritic stainless steel sheet as a current collector in a sulfide-based solid-state battery. Therefore, the Cr content is 18.00% or more. The Cr content is preferably 19.00% or more. Meanwhile, if the Cr content is more than 32.00%, the toughness deteriorates due to precipitation of a σ phase in some cases. Therefore, the Cr content is 32.00% or less. The Cr content is preferably 25.00% or less.

### Ni: 0.01 to 4.00%

Ni has an effect of increasing the corrosion resistance. This effect is obtained at an Ni content of 0.01% or more. However, if the Ni content is more than 4.00%, the susceptibility to stress corrosion cracking is increased. Furthermore, Ni is so expensive as to increase the cost. Therefore, the Ni content is in the range of 0.01 to 4.00%. The Ni content is preferably 0.10% or more. The Ni content is preferably 2.00% or less, and more preferably 0.50% or less.

### Al: 0.001 to 0.150%

Al is used for deoxidation. This effect is obtained at a content of 0.001% or more. However, if the Al content is more than 0.150%, the ductility deteriorates. Therefore, the Al content is 0.150% or less. The Al content is preferably 0.100% or less.

### N: 0.050% or less

If the N content is more than 0.050%, the ductility deteriorates. Therefore, the N content is 0.050% or less. The N content is preferably 0.030% or less. The lower limit of the N content is not particularly limited. However, excessive removal of N leads to an increase in the cost, and therefore the lower limit of the N content is preferably about 0.002%.

Although the basic components are described above, the following elements can be appropriately contained in the component composition of the present invention if necessary.

### <Optional Component (Part 1)>

The component composition of the present invention can further contain at least one selected from the group consisting of, by mass, Mo in an amount of 0.01 to 2.50%, Cu in an amount of 0.01 to 0.80%, Co in an amount of 0.01 to 0.50%, and W in an amount of 0.01 to 3.00%.

### Mo: 0.01 to 2.50%

Mo has an effect of stabilizing the oxide film formed on the surface of the ferritic stainless steel sheet. This effect is preferably obtained at a content of 0.01% or more. However, if the Mo content is more than 2.50%, the ferritic stainless steel sheet is embrittled. Therefore, in the case of including Mo, the Mo content is 0.01 to 2.50%.

### Cu: 0.01 to 0.80%

Cu has an effect of increasing the corrosion resistance of the ferritic stainless steel sheet. This effect is preferably obtained at a content of 0.01% or more. However, if the Cu content is more than 0.80%, the hot workability deteriorates, leading to deterioration of the productivity. Therefore, in the case of including Cu, the Cu content is 0.01 to 0.80%.

### Co: 0.01 to 0.50%

Co increases the corrosion resistance. This effect is obtained at a Co content of 0.01% or more. However, if the Co content is more than 0.50%, the workability deteriorates. Therefore, in the case of containing Co, the Co content is in the range of 0.01 to 0.50%. The Co content is preferably 0.05% or more. The Co content is preferably 0.30% or less.

### W: 0.01 to 3.00%

W increases the corrosion resistance. This effect is obtained at a W content of 0.01% or more. However, if the W content is more than 3.00%, the workability deteriorates. Therefore, in the case of containing W, the W content is in the range of 0.01 to 3.00%. The W content is preferably 0.80% or less, and more preferably 0.60% or less. The W content is preferably 0.05% or more.

### <Optional Component (Part 2)>

The component composition of the present invention can further contain at least one selected from the group consisting of, by mass, Ti in an amount of 0.01 to 0.45%, Nb in an amount of 0.01 to 0.60%, Zr in an amount of 0.01 to 0.40%, V in an amount of 0.01 to 0.30%, Ca in an amount of 0.0003 to 0.0030%, Mg in an amount of 0.0005 to 0.0050%, B in an amount of 0.0003 to 0.0050%, a rare earth metal (REM) in an amount of 0.001 to 0.100%, Sn in an amount of 0.001 to 0.500%, and Sb in an amount of 0.001 to 0.500%.

### Ti: 0.01 to 0.45%

Ti combines with C and N, and thus prevents excessive precipitation of a Cr carbonitride in the steel to suppress deterioration of the corrosion resistance (sensitization). This effect is obtained at a Ti content of 0.01% or more. Meanwhile, if the Ti content is more than 0.45%, the workability deteriorates. Therefore, in the case of containing Ti, the Ti content is in the range of 0.01 to 0.45%. The Ti content is preferably 0.10% or more. The Ti content is preferably 0.40% or less.

### Nb: 0.01 to 0.60%

Nb combines with C and N, and thus suppresses sensitization similarly to Ti. This effect is obtained at an Nb content of 0.01% or more. Meanwhile, if the Nb content is more than 0.60%, the workability deteriorates. Therefore, in the case of containing Nb, the Nb content is in the range of 0.01 to 0.60%. The Nb content is preferably 0.10% or more. The Nb content is preferably 0.40% or less.

### Zr: 0.01 to 0.40%

Zr combines with C and N contained in the steel, and thus suppresses sensitization similarly to Ti and Nb. This effect is obtained at a Zr content of 0.01% or more. Meanwhile, if the Zr content is more than 0.40%, the workability deteriorates. Therefore, in the case of containing Zr, the Zr content is in the range of 0.01 to 0.40%. The Zr content is preferably 0.03% or more. The Zr content is preferably 0.30% or less.

### V: 0.01 to 0.30%

V combines with C and N contained in the steel, and thus suppresses deterioration of the corrosion resistance (sensitization) similarly to Nb and Zr. This effect is obtained at a V content of 0.01% or more. Meanwhile, if the V content is more than 0.30%, the workability deteriorates. Therefore, in the case of containing V, the V content is in the range of 0.01 to 0.30%. The V content is preferably 0.20% or less, more preferably 0.15% or less, and still more preferably 0.10% or less.

### Ca: 0.0003 to 0.0030%

Ca improves the castability to enhance the manufacturability. This effect is obtained at a Ca content of 0.0003% or more. However, if the Ca content is more than 0.0030%, Ca combines with S to form CaS, and causes deterioration of the corrosion resistance. Therefore, in the case of containing Ca, the Ca content is in the range of 0.0003 to 0.0030%. The Ca content is preferably 0.0020% or less.

### Mg: 0.0005 to 0.0050%

Mg acts as a deoxidizer. This effect is obtained at a Mg content of 0.0005% or more. However, if the Mg content is more than 0.0050%, the toughness of the steel may deteriorate, leading to deterioration of the manufacturability. Therefore, in the case of containing Mg, the Mg content is in the range of 0.0005 to 0.0050%. The Mg content is preferably 0.0020% or less.

### B: 0.0003 to 0.0050%

B improves the secondary working embrittlement. This effect is obtained at a B content of 0.0003% or more. However, if the B content is more than 0.0050%, a precipitate containing B is generated to cause deterioration of the workability. Therefore, in the case of containing B, the B content is in the range of 0.0003 to 0.0050%. The B content is preferably 0.0005% or more. The B content is preferably 0.0030% or less.

### Rare earth metal (REM): 0.001 to 0.100%

A rare earth metal (REM: an element of atomic number 57 to 71, such as La, Ce, or Nd) has an effect for deoxidation. This effect is obtained at a REM content of 0.001% or more. However, if the REM content is more than 0.100%, the hot workability deteriorates. Therefore, in the case of containing a REM, the REM content is in the range of 0.001 to 0.100%. The REM content is preferably 0.010% or less.

### Sn: 0.001 to 0.500%

Sn has an effect of suppressing surface roughness after working. This effect is obtained at an Sn content of 0.001% or more. However, if the Sn content is more than 0.500%, the hot workability deteriorates. Therefore, in the case of containing Sn, the Sn content is in the range of 0.001 to 0.500%. The Sn content is preferably 0.010% or more. The Sn content is preferably 0.200% or less.

### Sb: 0.001 to 0.500%

Sb has an effect of suppressing surface roughness after working similarly to Sn. This effect is obtained at an Sb content of 0.001% or more. However, if the Sb content is more than 0.500%, the workability deteriorates. Therefore, in the case of containing Sb, the Sb content is in the range of 0.001 to 0.500%. The Sb content is preferably 0.010% or more. The Sb content is preferably 0.200% or less.

### <Remaining Part>

The components other than the above-described components in the component composition of the present invention are Fe and inevitable impurities.

### [Thickness of Ferritic Stainless Steel Sheet]

The ferritic stainless steel sheet of the present invention preferably has a thickness of 5 µm or more and 30 µm or less. If the thickness is less than 5 µm, the production efficiency significantly deteriorates, and the manufacturing cost is significantly increased. If the thickness is more than 30 µm, the weight of the battery is increased.

### [Application of Ferritic Stainless Steel Sheet]

By using the ferritic stainless steel sheet of the present invention in a current collector in a sulfide-based solid-state battery, it is possible to suppress a reaction between the sulfide-based solid electrolyte included in the sulfide-based solid-state battery and the current collector. The ferritic stainless steel sheet of the present invention is suitable for a current collector in a sulfide-based solid-state battery.

### (2) Method for Manufacturing Ferritic Stainless Steel Sheet for Current Collector in Sulfide-Based Solid-State Battery

Next, a method for manufacturing the ferritic stainless steel sheet of the present invention will be described.

### [Manufacture of Ferritic Stainless Steel Sheet]

A steel slab having the above-described component composition is hot-rolled to obtain a hot-rolled sheet. The obtained hot-rolled sheet is annealed and pickled if necessary. Then, the hot-rolled sheet is cold-rolled to obtain a cold-rolled sheet (ferritic stainless steel sheet) having a desired thickness. For example, in the case of the final thickness of 10 µm, the cold-rolled sheet is annealed if necessary, and further cold-rolled to the final thickness.

The conditions in the hot-rolling, the cold-rolling, the hot-rolled sheet annealing, the cold-rolled sheet annealing, and the like are not particularly limited, and may be in accordance with a conventional method. After the cold-rolled sheet annealing, pickling may be performed. Bright annealing may be performed instead of the cold-rolled sheet annealing.

### [Examples]

Ferritic stainless steel sheets having a thickness of 10 µm that had component compositions described in the following Table 1 (in which the remaining part consisted of Fe and inevitable impurities) were prepared. Using the prepared ferritic stainless steel sheets, the sulfidation resistance was evaluated in the following manner in simulation of the battery environment of a sulfide-based solid-state battery.

### [Evaluation of Sulfidation Resistance]

First, Li₂S and P₂S₅ were mixed at a molar ratio of Li₂S : P₂S₅ = 70 : 30 in a mortar in an argon atmosphere having a dew point of -70°C or less to obtain a mixture. The obtained mixture was subjected to mechanical milling using a ball mill under the conditions of 25°C and 500 rpm for 20 hours, and then subjected to a heat treatment at 200°C for 1.5 hours. The mixture after the heat treatment was pressurized to be formed at 100 MPa to prepare a circular pellet of a sulfide-based solid electrolyte having a thickness of 500 µm and a diameter of 11.3 mm.

Next, each of the prepared ferritic stainless steel sheets was cut into a circular shape having a diameter of 11.3 mm, and on the resulting ferritic stainless steel sheet, the prepared sulfide-based solid electrolyte was placed. On the resulting product, a circular counter electrode having a thickness of 100 µm and a diameter of 11.3 mm obtained by bonding an Li metal foil to a Cu foil was placed so that the Li metal foil was in contact with the sulfide-based solid electrolyte. The resulting product was pressurized. Thus, two measurement cells were prepared from each ferritic stainless steel sheet.

The Li metal foil serves as both a counter electrode and a reference electrode. All of the potentials in the following electrochemical measurement were a potential with respect to the reference electrode by V (vs. Li/Li⁺).

Using the measurement cells prepared as above, electrochemical measurement was performed with a scan of potential under the following conditions. More specifically, a test in a potential range assumed to be a positive electrode side (also referred to as a positive electrode assuming test) and a test in a potential range assumed to be a negative electrode side (also referred to as a negative electrode assuming test) were performed. In each test, the current density of the ferritic stainless steel sheet was observed during a scan of potential, and thus the sulfidation resistance of the sulfide-based solid-state battery in the battery environment was evaluated. The initial immersion potential (immersion potential at the start of the test) was about 2.0 to 2.5 V in each test.

If the current density is low in this evaluation, it can be determined that the sulfidation reaction between the ferritic stainless steel sheet and the sulfide-based solid electrolyte does not occur, and the sulfidation resistance can be ensured.

The measurement was performed at 25°C in an argon atmosphere having a dew point of -70°C or less.

The measurement cells were used for the positive electrode assuming test and the negative electrode assuming test, respectively.

### Method of Scan of Potential

(1) Positive electrode assuming test: immersion potential at start of test →- 5.0 V → immersion potential at start of test
(2) Negative electrode assuming test: immersion potential at start of test → 0.0 V → immersion potential at start of test
   Potential: potential with respect to Li metal foil as counter electrode by V (vs. Li/Li⁺)
   Scan speed: 5 mV/s

The evaluation criteria for the sulfidation resistance were as described below. Table 1 shows the evaluation results.
o (acceptable): The absolute value of the maximum current density is 30 µA/cm² or less in both the positive electrode assuming test and the negative electrode assuming test.
× (unacceptable): The absolute value of the maximum current density is more than 30 µA/cm² in any one or both of the positive electrode assuming test and the negative electrode assuming test.

### [Table 1]

**Table 1**

| Steel No. | Component composition (mass%) | | | | | | | | | | | | | | Evaluation results of sulfidation resistance | Note |
|---|---|---|---|---|---|---|---|---|---|---|---|---|---|---|---|---|
| | C | Si | Mn | P | S | Cr | Ni | Al | N | Mo | Nb | Ti | Zr | Other components | | |
| A | 0.036 | 0.25 | 0.53 | 0.026 | 0.007 | 16.08 | 0.13 | 0.003 | 0.043 | - | - | - | - | - | × | Comparison steel |
| B | 0.013 | 0.33 | 0.25 | 0.025 | 0.004 | 19.05 | 0.11 | 0.003 | 0.012 | - | - | - | - | - | ∘ | Acceptable steel |
| C | 0.008 | 0.21 | 0.42 | 0.034 | 0.003 | 18.13 | 0.12 | 0.002 | 0.011 | 0.41 | - | - | - | - | ∘ | Acceptable steel |
| D | 0.007 | 0.07 | 0.16 | 0.033 | 0.005 | 18.34 | 0.11 | 0.021 | 0.008 | - | 0.26 | - | - | - | ∘ | Acceptable steel |
| E | 0.004 | 0.35 | 0.14 | 0.027 | 0.003 | 19.22 | 0.23 | 0.009 | 0.009 | 1.81 | 0.34 | - | - | - | ∘ | Acceptable steel |
| F | 0.009 | 0.16 | 0.19 | 0.026 | 0.003 | 20.64 | 0.15 | 0.035 | 0.009 | - | - | 0.27 | - | Cu: 0.43 | ∘ | Acceptable steel |
| G | 0.012 | 0.12 | 0.17 | 0.021 | 0.003 | 21.05 | 0.13 | 0.033 | 0.011 | 0.53 | - | 0.33 | - | Co: 0.07, V: 0.04, Ca: 0.0004, B: 0.0005 | ∘ | Acceptable steel |
| H | 0.005 | 0.11 | 0.13 | 0.024 | 0.001 | 23.41 | 0.29 | 0.092 | 0.011 | 0.26 | 0.22 | 0.11 | 0.03 | W: 0.08, Mg: 0.0009, REM: 0.003, Sn: 0.012, Sb: 0.015 | ∘ | Acceptable steel |
| I | 0.004 | 0.18 | 0.16 | 0.026 | 0.007 | 30.04 | 0.23 | 0.073 | 0.011 | 1.82 | 0.14 | - | - | - | ∘ | Acceptable steel |

| | | | | | | | | | | | | | | | | |
|---|---|---|---|---|---|---|---|---|---|---|---|---|---|---|---|---|
| Annotation: The underline indicates that the value is out of the range of the present invention. | | | | | | | | | | | | | | | | |

Table 1 described above clarifies the following matters.
(a) In all of the examples of the invention in which steel of Nos. B to I was used, desired sulfidation resistance was obtained.
(b) In the comparative example in which steel of No. A was used, desired sulfidation resistance was not obtained.

## Claims

1. A ferritic stainless steel sheet for a current collector in a sulfide-based solid-state battery, the ferritic stainless steel sheet comprising, as a component composition: by mass,
C in an amount of 0.001 to 0.050%;
Si in an amount of 0.01 to 2.00%;
Mn in an amount of 0.01 to 1.00%;
P in an amount of 0.050% or less;
S in an amount of 0.010% or less;
Cr in an amount of 18.00 to 32.00%;
Ni in an amount of 0.01 to 4.00%;
Al in an amount of 0.001 to 0.150%;
N in an amount of 0.050% or less; and
a remaining part consisting of Fe and inevitable impurities.

2. The ferritic stainless steel sheet for a current collector in a sulfide-based solid-state battery according to claim 1, the ferritic stainless steel sheet further comprising, as the component composition, at least one selected from the group consisting of, by mass,
Mo in an amount of 0.01 to 2.50%,
Cu in an amount of 0.01 to 0.80%,
Co in an amount of 0.01 to 0.50%, and
W in an amount of 0.01 to 3.00%.

3. The ferritic stainless steel sheet for a current collector in a sulfide-based solid-state battery according to claim 1 or 2, the ferritic stainless steel sheet further comprising, as the component composition, at least one selected from the group consisting of, by mass,
Ti in an amount of 0.01 to 0.45%,
Nb in an amount of 0.01 to 0.60%,
Zr in an amount of 0.01 to 0.40%,
V in an amount of 0.01 to 0.30%,
Ca in an amount of 0.0003 to 0.0030%,
Mg in an amount of 0.0005 to 0.0050%,
B in an amount of 0.0003 to 0.0050%,
a rare earth metal in an amount of 0.001 to 0.100%, Sn in an amount of 0.001 to 0.500%, and
Sb in an amount of 0.001 to 0.500%.
